(19)

**Europäisches Patentamt**

**European Patent Office**

**Office européen des brevets**

(11) **EP 4 708 220 A1**

(12) **EUROPÄISCHE PATENTANMELDUNG**

(43) Date of publication:
**11.03.2026 Bulletin 2026/11**

(21) Application number: **24198521.7**

(22) Date of filing: **04.09.2024**

(51) International Patent Classification (IPC):
**G06V 10/82** *(2022.01)*     **G06V 20/56** *(2022.01)*
**G06V 20/58** *(2022.01)*

(52) Cooperative Patent Classification (CPC):
**G06V 10/82; G06V 20/56; G06V 20/58**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bayerische Motoren Werke
Aktiengesellschaft
80809 München (DE)**

(72) Inventors:
• **Schmidt, Sebastian
  81925 München (DE)**
• **Koerner, Julius
  80933 München (DE)**

(54) **METHOD AND SYSTEM FOR DETERMINING THE RELATIONSHIP OF OBJECT COMPLIANCE DETECTION AND OBJECT CLASSIFICATION IN AT LEAST PARTIALLY AUTOMATED VEHICLES**

(57) The present disclosure relates to determining a reliability of object instance detection and classification performed by an automotive vision system on sets of automotive sensor data deployed in an at least partially automated vehicle. Based on a latent space vector of an internal autoencoder of the automotive vision system and a corresponding autoencoder latent space probability density function, an out of distribution (OOD) indicator is determined for each set of automotive sensor data. If a comparison of the OOD indicator of a sensor data reliability number of subsequent sets of automotive sensor data indicates a violation of an OOD threshold, a driving automation system feature of the vehicle is caused to achieve a minimal risk condition of the vehicle.

Fig. 2

EP 4 708 220 A1

## Description

TECHNICAL FIELD

The invention generally relates to object detection and instance determination in at least partially automated vehicles and more precisely to determining both the reliability of automotive sensor data and of the object classification and instance detection performed based on the automotive sensor data.

BACKGROUND

An at least partially automated vehicle, i.e. a vehicle configured to perform at least one driving automation system feature, relies on automotive sensor data in order to determine objects within their driving environment. The object determination, which is performed by an automotive vision system, provides the environmental awareness required for the performance of the at least one driving automation system feature. Accordingly, the at least partially automated vehicle needs to ensure that the automotive sensor data captured by automotive sensors of the at least partially automated vehicle can be relied upon for the determination of the objects, i.e. the determination of object instances as well as of the corresponding object classes, within the driving environment. Given that the at least one driving automation system feature controls at least one of the longitudinal movement and the lateral movement of the at least partially automated vehicle, the at least partially automated vehicle further needs to ensure the reliability of the automotive sensor data quickly in order to enable the at least one driving automation system feature to take timely and safe measures if the automotive sensor data are deemed unreliable.

To further enhance the safety of the control of the at least partially automated vehicle provided by the at least one driving automation system feature, the at least partially automated vehicle may further need to ensure the reliability of the object classification performed by the at least partially automated vehicle based on the automotive sensor data. In other words, in addition to quickly ensuring the reliability of the input data provided to the automotive vision system, it may further be required to ensure the reliability of the output data provided by the automotive vision system.

It is therefore an objective of the present disclosure to ensure the reliability of an automotive vision system in order to ensure timely and safe control of a vehicle by at least one driving automation system feature.

SUMMARY OF THE INVENTION

To achieve this objective, the present disclosure provides a method configured to determine a reliability of an object instance detection and classification in a vehicle. The vehicle is configured to perform at least one driving automation system feature based on the object instance detection and classification. The object instance detection and classification is performed using an automotive vision system comprising an input encoder, an internal autoencoder coupled to the input encoder, an object class decoder coupled to the input encoder and the autoencoder and an instance decoder coupled to the input encoder and the autoencoder. The method comprises determining, using the object class decoder, within each set of a plurality of sets of automotive sensor data, one or more object classes out of a plurality of object classes, each object class corresponding to an object type encounterable in a driving environment of the vehicle, detecting, using the instance decoder, within each set of the plurality of sets of automotive sensor data, one or more object instances, each object instance corresponding to an object in the driving environment of the vehicle, determining, for each set of the plurality of sets of automotive sensor data, an out of distribution -OOD-indicator based on a latent space vector of the internal autoencoder and an autoencoder latent space probability density function, and, if a comparison of the OOD indicator of a sensor data reliability number of subsequent sets of automotive sensor data indicates a violation of an OOD threshold, causing the at least one driving automation system feature to achieve a minimal risk condition of the vehicle.

The present disclosure further provides a corresponding automotive control unit and a vehicle comprising the automotive control unit.

BRIEF DESCRIPTION OF THE DRAWINGS

Examples of the present disclosure will be described with reference to the following appended drawings, in which like reference signs refer to like elements.

     Fig. 1 shows a flowchart of a method configured to determine a reliability of an object instance detection and classification in a vehicle configured to perform at least one driving automation system feature based on the object instance detection and classification according to examples of the present disclosure.

     Fig. 2 illustrates an automotive vision system, inputs and outputs thereof as well as the determination of indicators based on the automotive vision system according to examples of the present disclosure.

     Fig. 3 illustrates a vehicle according to examples of the present disclosure.

     Fig. 4 illustrates an automotive control unit according to examples of the present disclosure.

It should be understood that the above-identified drawings are in no way meant to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

DETAILED DESCRIPTION

The present disclosure provides an approach to determining the reliability of the object instance detection and object classification performed by an automotive vision system. The automotive vision system performs the object instance detection and object classification continuously during operation of a vehicle on sets of automotive sensor data, which are captured by automotive sensors of the vehicle. That is, the automotive vision system performs the object instance detection and object classification every time sets of automotive sensor data are captured in order to provide at least one driving automation system feature of the vehicle with current information on the driving environment of the vehicle. Concurrently with the object instance detection and object classification, an out of distribution (OOD) indicator is determined for each set of automotive sensor data based on a probability density function of a latent space of an internal autoencoder. The OOD indicator is indicative of whether the corresponding set of automotive sensor data corresponds to sets of automotive sensor data on which the automotive vision system has been trained on. If a given set of automotive sensor data corresponds to sets of automotive sensor data on which the automotive vision system has been trained, the given set of automotive sensor data may be considered to be in distribution. Otherwise, it may be considered to be out of distribution. Accordingly, the OOD indicator is indicative of whether the automotive vision system is likely to reliably determine object instance and object classes within the corresponding set of automotive sensor data.

The OOD indicator is determined based on the probability density function of the latent space of the internal autoencoder because the latent space of the internal autoencoder exhibits a lower dimensionality than any other layer of the automotive vision system. Consequently, determining the OOD indicator based on the probability density function on the layer of lowest dimensionality of the automotive vision system enables faster determination of the OOD indicator and thus the determination of the OOD concurrently with the object instance detection and object classification and in time before the subsequent set of automotive sensor data is provided to the automotive vision system. More precisely, the internal autoencoder of the automotive vision system is provided in the automotive vision system to reduce the dimensionality within the automotive vision system and may therefore be implemented based on the processing power of an automotive control unit performing the determination of the OOD indicator and the resulting constraints on the dimensionality of the latent space from which the probability density function is derived.

If the OOD indicator of a threshold number, i.e. a sensor data reliability number, of sets of automotive sensor data falls below an OOD threshold, the sets of automotive sensor data are deemed to be unreliable for the performance of the object instance detection and object classification performed by the automotive vision system. Consequently, the at least one driving automation system feature to achieve a minimal risk condition of the vehicle, which may e.g. entail prompting a driver to take over control, to bring the vehicle to a controlled stop or to return the vehicle to a safe location in a limp-home mode.

To further enhance the reliability determination of the object instance detection and object classification performed by the automotive vision system, an uncertainty indicator of the object class determination may be derived from an object decoder of the automotive vision system. The uncertainty indicator may be indicative of an uncertainty of the object class determination performed by the automotive vision system. However, since an uncertainty regarding the object classification is deemed to be less severe than unreliable sets of automotive sensor data, the at least one driving automation system feature does not achieve a minimal risk condition of the vehicle in response to an uncertainty indicator exceeding an uncertainty threshold for a threshold number of sets of automotive sensor data. Rather, the driving automation system feature reduces the speed of the vehicle and/or the functionality of the at least one driving automation system feature if the uncertainty indicator exceeds an uncertainty threshold for a threshold number of sets of automotive sensor data and returns to normal speed and/or unlimited functionality if the uncertainty indicator falls below the uncertainty threshold for the threshold number of sets of automotive sensor data.

In summary, the reliability determination according to the present disclosure determines the reliability of the object instance detection and object classification performed by the automotive vision system based on the OOD indicator, which is determined for each set of automotive sensor data concurrently with the object instance detection and object class determination and before the processing of the subsequent set of automotive sensor data due to the reduced dimensionality provided by the internal autoencoder. The reliability determination may further be enhanced based on the uncertainty indicator, which may indicate the uncertainty of the object class determination within each set of automotive sensor data. If sets of automotive sensor data are deemed unreliable, the at least one driving automation system feature achieves the minimal risk condition of the vehicle. If the object classification is deemed unreliable, the at least one driving automation system feature may limit the speed of the vehicle and/or the functionality of the at least one driving automation system feature.

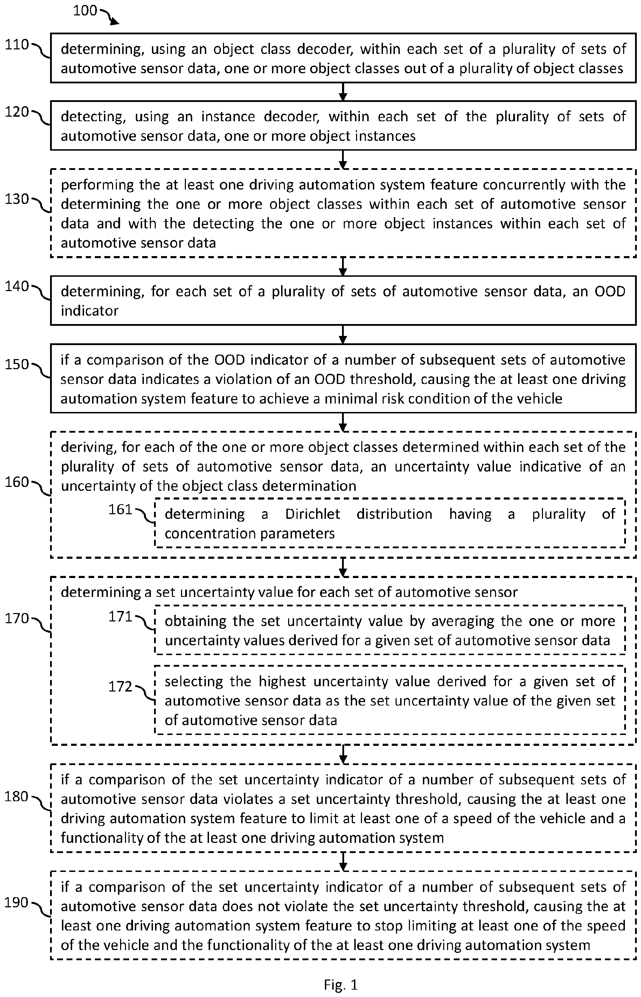

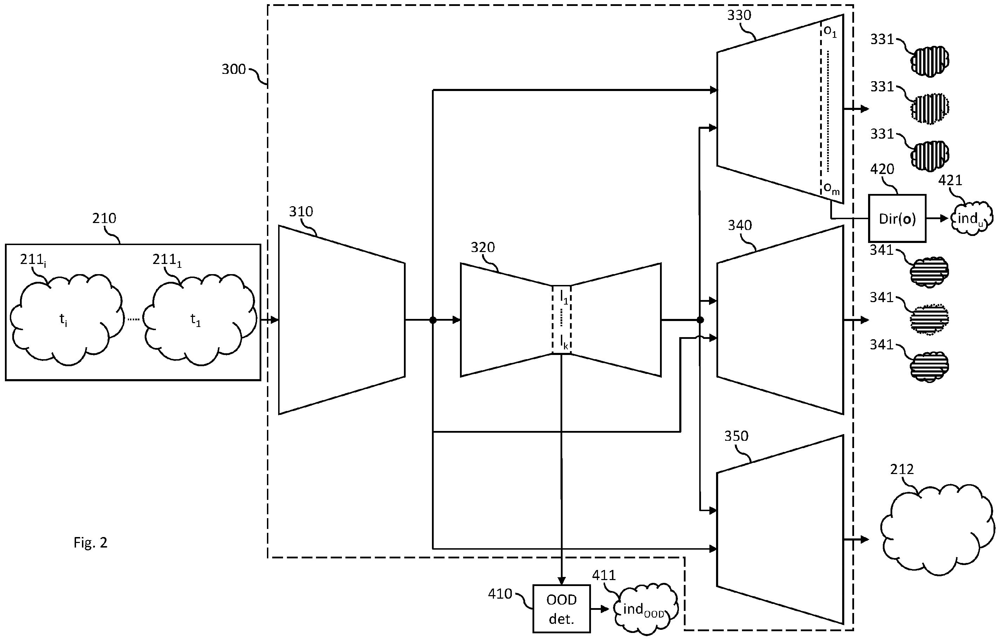

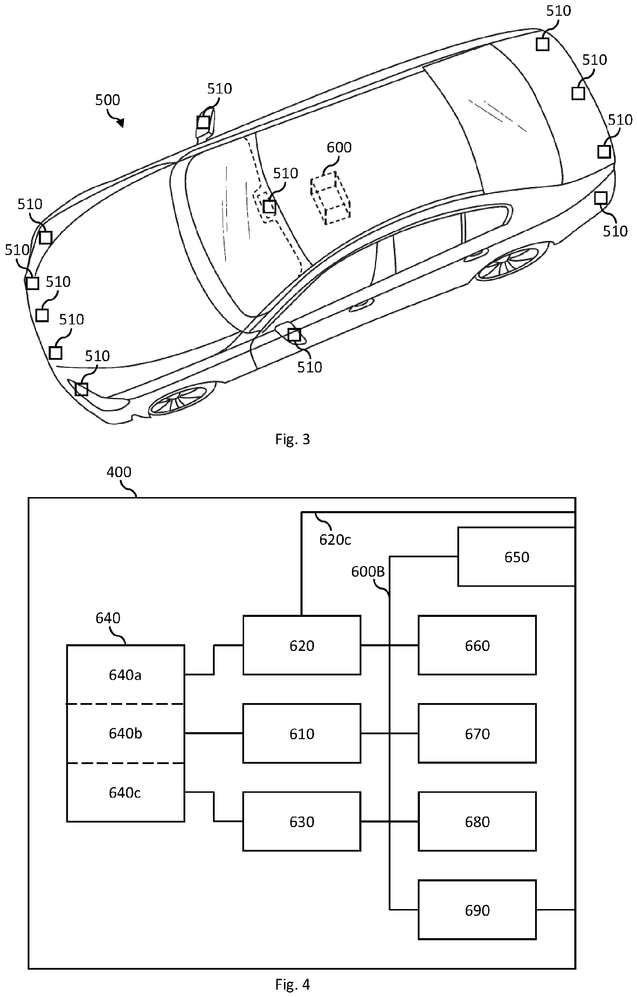

This general concept will be explained with reference to the appended drawings, with Fig. 1 providing a flowchart of a method 100 configured to determine a reliability of an object instance detection and classification in a vehicle configured to perform at least one driving automation system feature based on the object instance detection and classification. Fig. 2 illustrates an automotive vision system 300 based on which method 100 performs the object class determination and the object instance detection and from which method 100 obtains indicators concerning the reliability of the automotive sensor data as well as of the object classification. In addition, Fig. 3 illustrates a vehicle according to the present disclosure and Fig. 4 illustrates an automotive controller configured to perform method 100.

It will be understood that dashed boxes in Fig, 1 illustrate optional method steps.

Method 100 is configured to determine a reliability of an object instance detection and classification in a vehicle, such as vehicle 500 of Fig. 3, configured to perform at least one driving automation system feature based on the object instance detection and classification.

Vehicle 500 in the context of the present disclosure refers to any kind of motor vehicle configured to transport people and/or cargo. The motor of vehicle 500 may be any kind of motor, such as an electric motor or an internal combustion engine. Vehicle 500 may e.g. be a passenger vehicle. It will however be understood that vehicle 500 may also be a bus, a truck or any other kind of vehicle including one or more automotive sensors 510 and an automotive control unit 600 enabling vehicle 500 to provide at least one driving automation system feature.

In the context of the present disclosure, driving automation system feature is to be understood in the sense of standard J3016 of SAE International as design-specific functionality of a driving automation system at a given level of driving automation, i.e. any one of levels 1 to 5 of driving automation as defined in the taxonomy of driving automation of standard J3016. For example, the driving automation system feature may be a level 1 lane centering functionality or a level 3 traffic jam assistant on controlled-access highways, i.e. a functionality controlling the longitudinal and lateral motion of vehicle 500 up to a predefined speed on controlled-access highways.

Accordingly, automotive control unit 600 and one or more sensors 510 are configured to enable at least one driving automation system feature. In this context, method 100 ensures the reliability of the object classification and object instance detection which provides the environmental awareness required for the performance of the at least one driving automation system feature by automotive control unit 600.

The one or more automotive sensors 510 may be configured to capture automotive sensor data indicative of a driving environment of vehicle 500, which may provide the environmental awareness enabling the at least one driving automation system feature. For example, the one or more automotive sensors 510 may provide vehicle 500 with information on the position and size of other vehicles or with information regarding road surface markings, which are extracted from the automotive sensor data based on the object classification performed by the automotive vision system. To this end, the one or more automotive sensors 510 may be radar sensors, which may be configured to emit radio waves in order to determine a distance, an angle and a velocity of objects around the vehicle based on the reflected radio waves. The one or more sensors 510 may be light detection and ranging (LIDAR) sensors, which are configured to emit laser beams in order to determine a distance, an angle and a velocity of objects around vehicle 500 based on the reflected laser beams. The one or more sensors 510 may be cameras, which are configured to capture images of the environment of the vehicle. The one or more sensors 510 may be thermographic cameras, which are configured to capture images of the environment of vehicle 400 based on infrared radiation. It will be understood that LIDAR sensors, radar sensors or cameras are merely provided as examples of sensor types of the one or more sensors 510. For example, the one or more sensors 510 may also be ultrasonic sensors. More generally, the one or more automotive sensors 510 may be any type of sensor capable of capturing automotive sensor data indicative of the environment of vehicle 500. It will further be understood that the one or more automotive sensors 510 may include multiple sensors of various types of sensors. Further, the one or more automotive sensors 510 of the same type may exhibit different properties, e.g. by being configured to capture sensor data at different ranges, such as a close range, a middle range and a far range. For example, vehicle 500 may include three close range radar sensors each at a front and a back of vehicle 500, a middle range to far range radar sensor at the back of vehicle 500, a LIDAR sensor at the front of vehicle 500, a rear-facing camera at the back of vehicle 500, a front-facing camera at the front of the vehicle, a front-facing camera at the rear-view mirror and a rear-facing close range to middle range radar sensor in each door-mounted outer rear view mirror. It will be understood that vehicle 500 may include more or fewer automotive sensors than shown in Fig.3 and discussed in the above example.

In view of the various types of automotive sensors discussed above, it will be understood that automotive sensor data in the sense of the present application may be any kind of data, such as an image frame, a data cloud or any other type of data structure suitable to include data from one or more of automotive sensors 510 and to thereby convey information indicative of the driving environment of vehicle 500. Further, automotive sensor data received at a given capture time is referred to in the present disclosure as a set of automotive sensor data. That is, a set of automotive sensor data refers to automotive sensor data captured by one or more automotive sensors 410 at approximately the same time. Since automotive sensors 510 are configured to capture automotive sensor data continuously or at discrete time intervals, the automotive sensor data is provided by automotive sensors 510 as a plurality of automotive sensor data, which may also be referred to as a stream of automotive sensor data.

To illustrate the automotive sensor data, the sets thereof and the stream of automotive sensor data, each set of automotive sensor data is illustrated as a set of automotive sensor data $211_i$ in the form of a cloud in Fig. 2 with i indicating the total number of sets of automotive sensor data in plurality of automotive sensor data 210. The exemplary sets of automotive sensor data $211_1$ to $211_i$ are shown in Fig. 2 as part of plurality of automotive sensor data 210 to illustrate the fact that the sets of automotive sensor data are provided continuously or at least at discrete time intervals.

In the context of the present disclosure, object instance detection and classification refers to detecting one or more object instances and a corresponding object class out of a plurality of object classes within sets of automotive sensor data $211_1$ to $211_i$ captured by the one or more automotive sensors 510. The object instance detection and classification may for example identify within sets of automotive sensor data provided by a camera included in vehicle 500 whether vehicle 500 is located on a controlled-access highway, a limited-access road, an arterial road, a local road or a parking lot. In this example, the plurality of object classes may include the types of road on which vehicle 500 may be located. Further, the object instance detection and classification may e.g. identify within sets of automotive sensor data provided by a LIDAR sensor and multiple cameras included in vehicle 500 other vehicles and the type of vehicle, road surface markings and the type of road surface marking, road signs and the type of road sign, vulnerable road users (VRUs) as well as traffic lights and the indication states of the traffic lights. Accordingly, the plurality of object classes may include any possible road user, road traffic control device and road surface marking as well as any other type of element encounterable in the driving environment of the vehicle 500 relevant for enabling at least one driving automation system feature. Thus, the object instance detection and classification may implement any perception task which determines objects and the classes thereof in the vicinity of vehicle 500, with the objects referring to both a determination of the general environment of vehicle 500 as well as a determination of individual elements in the vicinity of vehicle 500.

It will accordingly be understood that object classification in the context of the present disclosure may identify the classes of multiple object instances within sets of automotive sensor data $211_1$ to $211_i$ and is not limited to the identification of a single object class within sets of automotive sensor data $211_1$ to $211_i$. Similarly, it will be understood that object instance detection in the context of the present disclosure refers to identifying individual objects within sets of automotive sensor data, such as a VRU, a vehicle or a traffic light. However, each object instance is merely indicative of the presence and the location of an object within automotive sensor data and not of the object class. Thus, each object instance indicates a position within and the data points of automotive sensor data, which together form an object.

The object classifier may be any kind of machine learning algorithm which has been trained based on training automotive sensor data to classify objects in the driving environment of the vehicle, i.e. which has been trained to perform a visual perception task as defined above. Training automotive sensor data may be unlabeled, partially labeled or fully labeled. In other words, the training automotive sensor data may include the corresponding object classes in addition to the automotive sensor data. However, given the active learning functionality discussed in detail below, the training automotive sensor data need not be fully labeled.

The object instance detection and classification is performed by automotive vision system 300 illustrated in Fig. 2. Automotive vision system 300 at least includes input encoder 310, internal autoencoder 320, object class decoder 330 and object instance decoder 340. Further, automotive vision system 300 may include reconstruction decoder 350.

Input encoder 310 is configured to encode each set of automotive sensor data $211_1$ to $211_i$ in order to provide a representation of each set of automotive sensor data $211_1$ to $211_i$ for the subsequent determination of one or more object classes and the detection of one or more object instances. Accordingly, input encoder may, together with object class decoder 330 and object instance decoder 340, respectively, form an object classifier and an instance detector. Input encoder may 310 may be implemented using any kind of machine learning algorithm, such as a convoluted neural network (cNN) or a data clustering algorithm.

Internal autoencoder 320 is coupled to input encoder 310 and is thus configured to encode the output of input encoder 310 and recreate the output of input encoder 310 based on the encoded output of input encoder 310. The encoded output of input encoder 310 may also be referred to as the code, the bottleneck or the latent space of internal autoencoder 320. In Fig. 2, the encoded output of input encoder 310 is illustrated as latent space vector l with elements $l_1$ to $l_k$, i.e. in the example of Fig. 2 the latent space vector has a dimensionality of k. Further, dimensionality k of latent space vector l is lower than the dimensionality of the output of input encoder 310. Accordingly, latent space vector l enables faster determination of the OOD indicator of the corresponding set of automotive sensor data $211_1$ to $211_i$ than the output of input encoder 310, which without internal autoencoder 320 would otherwise exhibit the lowest dimensionality within automotive vision system 300.

To illustrate the determination of the OOD indicator based on latent space vector l of internal autoencoder 320, Fig. 3 shows OOD indicator determination 410 as receiving latent space vector l from internal auto-

encoder 320 and outputting OOD indicator 411 of the current input set of automotive sensor data 211.

The dimensionality k of latent space vector I may be chosen based on the computation power and computation duration requirements of the OOD indicator. That is, the implementation of internal autoencoder determines the computation duration of the OOD indicator, which needs to comply with the time requirements of the reliability determination for each set of automotive sensor data and the need to quickly determine whether the at least one driving automation system feature needs to achieve the minimal risk condition of vehicle 500 or not.

Object class decoder 330 is coupled to input encoder 310 and internal autoencoder 320. Object class decoder 330 is configured to determine one or more object classes for one or more data points within each set of automotive sensor data $211_1$ to $211_i$ based on the output of input encoder 310 and the output of internal autoencoder 320. Since the output of internal autoencoder 320 is a reconstruction of the output of input encoder 310, object class decoder in effect receives two representations of the same information. By basing the object class determination on these two representations, the accuracy of the object class detection may be increased. It will thus be understood that object class decoder may receive only one of the output of input encoder 310 or the output of internal encoder 320 if an increase in accuracy is not required or if the increase in computation time caused by the increase in input dimensionality at object class decoder 330 would lead to a computation duration violation.

Object class decoder 330 is configured to determine a plurality of class probabilities, with each class probability indicating for one or more data points of each set of automotive sensor data $211_1$ to $211_i$ the probability of the one or more data points being indicative of a corresponding object class with each object class corresponding to an object type encounterable in a driving environment of vehicle 500. Taking an object classifier configured to identify 100 different object classes as an example, the plurality of class probabilities in this example includes 100 class probabilities with each class probability indicating, for a given data point within the automotive sensor data, the probability of the given data point being indicative of each of the 100 object classes. It will be understood that the object classifier may be able to identify any number of object classes, such as 10,000 or 10, depending on the type of object classification the object classifier is designed to perform within the context of the object class determination required to implement the at least one driving automation system feature of vehicle 500. Based on the highest class probability out of the plurality of class probabilities determined for the one or more data points of each set of automotive sensor data $211_1$ to $211_i$, object decoder 330 determines the one or more data points of each set of automotive sensor data $211_1$ to 211 as being indicative of the object class corresponding to the highest class probability.

In Fig. 3, the plurality of class probabilities is illustrated by output vector o of class decoder 330. In the example of Fig. 3, object class decoder is configured to detect m classes. The one or more object classes detected within each set of automotive sensor data $211_1$ to $211_i$ are illustrated in Fig. 3 by detected object classes 331.

Object class decoder 330 may be implemented as a neural network configured to perform the determination of the object classes with a plurality of activation levels of an output layer of the neural network corresponding to the plurality of class probabilities and thus to output vector o shown in Fig. 3.

Instance decoder 340 is coupled to input encoder 310 and internal autoencoder 320. Instance decoder 340 is configured to detect within each set of automotive sensor data $211_1$ to $211_i$ one or more object instances 341 based on the outputs of input encoder 310 and internal autoencoder 320. Each object instance corresponds to an object in the driving environment of vehicle 500. As in the case of object class decoder 330, instance decoder 340 thus receives two representations of the same information, which may improve the accuracy of the object instance detection performed by instance decoder 340. Due to the same computation duration considerations discussed with regard to object class decoder 330, object instance decoder 340 may also only receive the output of only input encoder 310 or internal autoencoder 320.

Each object instance 341 includes one or more data points of a corresponding set of automotive sensor data $211_1$ to $211_i$, which are deemed by instance decoder 340 to belong to a single object instance.

Instance decoder 340 may be implemented based on any type of machine learning algorithm suitable for object instance detection. To ensure interoperability, instance decoder 340 may be implemented similarly to input encoder 310 and object class decoder 330.

In some examples of the present disclosure, instance decoder 340 may also be coupled between input encoder 310 and internal autoencoder 320 on the one side and object class decoder 330 on the other side (not shown in Fig. 2). That is, in some examples of the present disclosure object class decoder 330 may perform object class determination for each object instance 341, i.e. based on the one or more data points of the corresponding set of automotive sensor data $211_1$ to $211_i$ included in each object instance 341, detected by instance decoder 340.

Reconstruction decoder 350 may be coupled to input encoder 310 and internal autoencoder 320. Reconstruction decoder 350 is configured to reconstruct each set of automotive sensor data $211_1$ to $211_i$ and to thereby generate reconstructed sets of automotive sensor data 212. That is, input encoder 310 and reconstruction decoder 350 may form an automotive sensor data autoencoder. By reconstructing each set of automotive sensor data $211_1$ to $211_i$, reconstruction decoder 350 may enable improving the accuracy of the latent space vector of internal autoencoder 320 based on comparing reconstructed sets of automotive sensor data 212 and corresponding sets of automotive sensor data $211_1$ to $211_i$ and adjusting input encoder 310 and internal autoencoder 320 based on the comparison. Further, reconstruction decoder 350 may enable self-supervised learning for automotive vision system 300.

In step 110, method 100 determines one or more object classes 331 out of the plurality of object classes within each set $211_1$ to $211_i$ of plurality of sets of automotive sensor data 210 using object class decoder 330.

In step 120, method 100 detects one or more object instances 341 within each set $211_1$ to $211_i$ of the plurality of sets of automotive sensor data 210 using instance decoder 340.

Method 100 may further include a step 130, in which method 100 may perform the at least one driving automation system feature concurrently with the object class determination and object instance detection of steps 110 and 120. In other words, it will be understood that the determination of the driving environment of vehicle 500 may be performed and used concurrently with the performance of the at least one driving automation system feature in order to control vehicle 500 based on the environmental awareness provided in steps 110 and 120.

In step 140, method 100 determines OOD indicator 411 for each set $211_1$ to $211_i$ of plurality of sets of automotive sensor data 210. Each OOD indicator 411 is based on latent space vector I of internal autoencoder 320 as well as an autoencoder latent space probability density function and is indicative of whether the corresponding set of automotive sensor data $211_1$ to $211_i$ corresponds to sets of automotive sensor data on which automotive vision system 300 and thus internal autoencoder 320 has been trained on. The autoencoder probability density function is thus indicative of the relative likelihood that latent space vector I is equal to any one of the latent space vectors generated by internal autoencoder 320 during training of automotive vision system 300 with training sets of automotive sensor data. The autoencoder latent space probability density function may be derived from an autoencoder latent space probability distribution modeled based on a normalizing flow of latent space vectors generated by internal autoencoder 320 during training of automotive vision system 300. The normalizing flow may e.g be implemented using the nflows library of PyTorch, the NeuTra library of TensorFlow or the Flowjax library of JAX with the latent space vectors determined during training of automotive vision system 300 serving as input of these libraries.

In some examples of the present disclosure, OOD indicator 411 of each set of automotive sensor data $211_1$ to $211_i$ may correspond to an output of the autoencoder latent space probability density function with an input of the autoencoder latent space probability density function being autoencoder latent space vector I of the corresponding set of automotive sensor data $211_1$ to $211_i$. It will be understood that OOD indicator 411 may be derived from the autoencoder latent space probability density function in any other way, e.g. by integrating the autoencoder latent space probability density function from minus infinity to latent space vector I of the corresponding set of automotive sensor data $211_1$ to 211i or based on Gaussian mixture models.

It will be understood that the autoencoder latent space probability distribution may indeed be a single function taking latent space vector I as input and outputting a corresponding vector, of which the length may serve as the OOD indicator 411. The autoencoder latent space probability distribution may also be a plurality of autoencoder latent space probability distributions with a corresponding autoencoder latent space probability distribution for each element of latent space vector I. In this example, OOD indicator 411 may be the average of the output values of the plurality of autoencoder latent space probability distributions. More generally, it will be understood that method 100 arrives for each latent space vector I of each set of automotive sensor data $211_1$ to $211_i$ at OOD indicator 411 based on the autoencoder latent space probability distribution in a manner enabling comparison of OOD indicator 411 in step 150 with an OOD threshold. It will thus be understood that step 140 may be performed multiple times, the number of times depending on the number k of elements of latent space vector I, i.e. dimensionality of latent space vector I.

In step 150, method 100 compares OOD indicator 411 of each set of automotive sensor data $211_1$ to $211_i$ to an OOD threshold. If this comparison violates the OOD threshold for a sensor data reliability number of subsequent sets of automotive sensor data $211_1$ to $211_i$, method 100 causes the at least one driving automation system feature to achieve a minimal risk condition of vehicle 500. Depending on the definition of the OOD indicator 411 and the OOD threshold, violating the OOD threshold may refer to exceeding or falling below the OOD threshold.

As an example, if the sensor data reliability number is defined as 5 in an implementation of method 100, and if the comparison of OOD indicator 411 of 5 subsequent sets of automotive sensor data $211_1$ to $211_i$ violates the OOD threshold, the sets of automotive sensor data provided by automotive sensors 510 are deemed unreliable and accordingly the at least one driving automation system feature should achieve the minimal risk condition of vehicle 500. It will be understood that 5 is provided as an example of the sensor data reliability number of subsequent sets of automotive sensor data $211_1$ to $211_i$. The sensor data reliability number of subsequent sets of automotive sensor data $211_1$ to $211_i$ may be any number of subsequent sets of automotive sensor data $211_1$ to $211_i$ chosen based on the amount of time which may expire between sets of automotive sensor data $211_1$ to $211_i$ starting to exhibit signs of being unreliable based on OOD indicator 411 and the at least one driving automation system feature being required to take action to ensure the safety of vehicle 500 in view of the unreliable awareness of the driving environment of vehicle 500 of the at least one driving automation system feature.

The minimal risk condition to be achieved by the at least one driving automation system feature may depend on the level of driving automation based on the taxonomy of driving automation of standard J3016 provided by the at least one driving automation system feature. If the at least one driving automation system feature is a driving automation system feature of level 3 or lower, the minimal risk condition may be a request to a driver of vehicle 500 to take over control of vehicle 500. If the at least one driving automation system feature is a driving automation system feature of level 4 or 5, the minimal risk condition may include providing one or more at least longitudinal control inputs by the least one driving automation system feature causing the vehicle to come to a stop. That is, the control inputs may include at least longitudinal control inputs but also lateral control inputs, e.g. in order to bring vehicle 500 to a safe stop in an emergency lane or to navigate the vehicle out of flowing traffic, e.g. to a parking spot, before bringing vehicle 500 to a stop. If the at least one driving automation system feature is a driving automation system feature of level 4 or 5, the minimal risk condition may include causing the vehicle to enter a limp-home mode, which may be configured to control the vehicle to return home or to a service point at a limited speed. The service point may be a repair shop or a dispatch center of vehicle 500.

Method 100 may include a step 160 and performed by object class uncertainty determination 420, in which method 100 may derive an uncertainty indicator 421 for each of the one or more object classes 331 determined by object class decoder 330 within each set of automotive sensor data $211_1$ to $211_i$. Uncertainty indicator 421 may be indicative of an uncertainty of the object class determination.

To determine uncertainty indicator 421, method 100 may in step 161 as part of step 160 determine a Dirichlet distribution having a plurality of concentration parameters, which may correspond to the plurality of class probabilities. That is, each uncertainty indicator 421 may be calculated based on the Dirichlet distribution as shown in equation (1):

$$U = \frac{m}{\sum_{k=1}^{m} o_k} \qquad (1)$$

In equation (1), U denotes uncertainty indicator 421 of the object classification performed by object class decoder 330 on the corresponding set of automotive sensor data $211_1$ to $211_i$, m denotes the number of classes object class decoder 330 is configured to identify, as shown in Fig. 2, and $o_k$ denotes the activation values of the output layer of object class decoder 330, which may correspond to the class probabilities, as likewise illustrated in Fig. 2.

It will be understood that the uncertainty indicator 421 may also be determined based on an entropy of the plurality of class probabilities or may be determined based on other uncertainty calculations based on Dirichlet distributions, such as entropic uncertainty of the Dirichlet distribution, a logarithmic uncertainty of the Dirichlet distribution.

Further, it will be understood that a high uncertainty indicator 421 may be indicative of an object class encountered by vehicle 500 in the driving environment may not be included in the number of classes object class decoder 330 is configured to identify, i.e. the object class may be unknown to object class decoder 330 is.

Method 100 may include a step 170, in which method 100 may determine a set uncertainty indicator for each set of automotive sensor data $211_1$ to $211_i$ based on the one or more uncertainty indicators 421 derived for each set of automotive sensor data $211_1$ to $211_i$. That is, the set uncertainty indicator may be indicative of the overall uncertainty of the object class determination performed by object class decoder 330 within a given set of automotive sensor data $211_1$ to $211_i$. To determine the set uncertainty indicator based on the one or more uncertainty indicators of a given set of automotive sensor data $211_1$ to $211_i$, method 100 may in a step 171 obtain the set uncertainty indicator by averaging the one or more uncertainty indicators 421 derived for a given set of automotive sensor data $211_1$ to $211_i$. Alternatively, method 100 may in a step 172 select the highest uncertainty indicator 421 derived for a given set of automotive sensor data $211_1$ to $211_i$ as the set uncertainty indicator of the given set of automotive sensor data $211_1$ to $211_i$.

Method 100 may include a step 180, in which method 100 may compare the set uncertainty indicator of subsequent sets of automotive sensor data $211_1$ to $211_i$ to a set uncertainty threshold. If the comparison indicates a violation of the set uncertainty threshold for an object determination reliability number of subsequent sets of automotive sensor data $211_1$ to $211_i$, method 100 may cause the at least one driving automation system feature to limit at least one of a speed of vehicle 500 and a functionality of the at least one driving automation system. The object determination reliability number of subsequent sets of automotive sensor data $211_1$ to $211_i$ may be any number of subsequent sets of automotive sensor data $211_1$ to $211_i$ based on a time for which an uncertainty of the object class determination performed by object class decoder 330 may be acceptable in view of the control of vehicle 500 performed by the at least one driving automation system feature and the safety of vehicle 500.

Finally, method 100 may include a step 190, in which method 100 may compare the set uncertainty indicator of subsequent sets of automotive sensor data $211_1$ to $211_i$ to the set uncertainty threshold. If the comparison indicates that the set uncertainty threshold is not violated for a functionality return number of subsequent sets of automotive sensor data $211_1$ to $211_i$, method 100 may cause the at least one driving automation system feature to stop limiting at least one of the speed of vehicle 500 and the functionality of the at least one driving automation system. That is, if subsequent to the limiting of the speed of vehicle 500 and/or the functionality of the at least one driving automation system in step 180 method 100 determines that the object class determination has become reliable again, method 100 may restore the speed of vehicle 500 and the functionality of the at least one driving automation system.

It will be understood that the functionality return number of subsequent sets of automotive sensor data $211_1$ to $211_i$ may be the same number or a different number of subsequent sets of automotive sensor data $211_1$ to $211_i$ than the object determination reliability number of subsequent sets of automotive sensor data $211_1$ to $211_i$.

Fig.4 shows automotive control unit 600 configured to perform method 100. Automotive control unit 600 may include a processor 610, a graphics processing unit (GPU) 620, automotive processing system 630, a memory 640, a removable storage 650, a storage 660, a cellular interface 670, a global navigation satellite system (GNSS) interface 680 and a communication interface 690.

Processor 610 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 510 may perform instructions causing automotive control unit 600 to perform method 100. Processor 610 may be directly coupled to any of the components of automotive control unit 600 or may be directly coupled to memory 630, GPU 620 and device bus 600B.

GPU 620 may be any kind of processing unit optimized for processing graphics related instructions or more generally for parallel processing of instructions. As such, GPU 620 may be configured to generate a display of information, such as information relating to one or more driving automation system features or telemetry data, to a driver of the vehicle, e.g. via a head-up display (HUD) or a display arranged within the view of the driver. GPU 620 may be coupled to the HUD and/or the display via connection 620C. GPU 620 may further perform at least a part of method 100 to enable fast parallel processing of instructions relating to method 100. It should be noted that in some embodiments, processor 610 may determine that GPU 520 need not perform instructions relating to method 100. GPU 620 may be directly coupled to any of the components of automotive control unit 600 or may be directly coupled to processor 610 and memory 630. In some embodiments, GPU 620 may also be coupled to the device bus.

Automotive processing system 630 may be any kind of system-on chip configured to provide trillions of operations per second (TOPS) in order to enable automotive control unit 600 to perform one or more driving automation system features while driving. Automotive processing system 630 may only interface with processor 610 or may interface with other devices via the system bus. Automotive processing system 630 may for example execute instructions relating to automotive vision system 300.

Memory 640 may be any kind of fast storage enabling processor 610, GPU 620 and automotive processing system 630 to store instructions for fast retrieval during processing of instructions as well as to cache and buffer data. Memory 640 may be a unified memory coupled to processor 610 and GPU 620 and automotive processing system 630 in order to enable allocation of memory 640 to processor 610, GPU 620 and automotive processing system 630 as needed. Alternatively, processor 610, GPU 620 and automotive processing system 630 may be coupled to separate processor memory 640a, GPU memory 640b and automotive processing system memory 640c.

Removable storage 650 may be a storage device which can be removably coupled with automotive control unit 600. Examples include a digital versatile disc (DVD), a compact disc (CD), a Universal Serial Bus (USB) storage device, such as an external SSD, or a magnetic tape. It should be noted that removable storage 650 may store data, such as instructions of method 100 and/or sets of automotive sensor data $211_i$, or may be omitted.

Storage 660 may be a storage device enabling storage of program instructions and other data. For example, storage 660 may be a hard disk drive (HDD), a solid state disk (SSD) or some other type of non-volatile memory. Storage 660 may for example store the instructions of method 100.

Removable Storage 650 and storage 660 may be coupled to processor 610 via system bus 600B. System bus 600B may be any kind of bus system enabling processor 610 and optionally GPU 620 as well as automotive processing system 630 to communicate with the other devices of automotive control unit 600. The system bus may for example be a Peripheral Component Interconnect express (PCIe) bus or a Serial AT Attachment (SATA) bus.

Cellular interface 670 may be any kind of interface enabling automotive control unit 600 to communicate via a cellular network, such as a 4G network or a 5G network.

GNSS interface 680 may be any kind of interface enabling automotive control unit 500 to receive position data provided by a satellite network, such as the Global Positioning System (GPS), the Global Navigation Satellite System (GLONASS) or Galileo.

Communications interface 690 may enable automotive control unit 600 to interface with external devices, either directly or via network, via a connection as illustrated by the line coupling communications interface 690 to the outside of automotive control unit 600. Communications interface 590 may for example enable automotive control unit 600 to couple to a wired or wireless network, such as Ethernet, Wifi, a Controller Area Network (CAN) bus or any bus system appropriate in vehicles. For example, automotive control unit 500 may be coupled to the one or more automotive sensors 510 to receive information about the environment of vehicle 500 in order to classify objects in the vicinity of vehicle 600. Communications interface 690 may also include a USB port or a serial port to enable direct communication with an external device.

Automotive control unit 600 may be integrated with vehicle 500, e.g. beneath the cabin, under the dashboard or in the trunk of vehicle 500.

It will be understood that automotive control unit 500 may include further or fewer elements than shown in Fig. 4 as required by the actual implementation and in particular in view of the processing power requirements of method 100 and automotive vision system 300 and the one or more driving automation system features. Further, the above discussed elements may be distributed across multiple (sub) control units.

The invention may further be illustrated by the following examples.

In an example, a method configured to determine a reliability of an object instance detection and classification in a vehicle configured to perform at least one driving automation system feature based on the object instance detection and classification performed using an automotive vision system comprising an input encoder, an internal autoencoder coupled to the input encoder, an object class decoder coupled to the input encoder and the autoencoder and an instance decoder coupled to the input encoder and the autoencoder, comprises: determining, using the object class decoder, within each set of a plurality of sets of automotive sensor data, one or more object classes out of a plurality of object classes, each object class corresponding to an object type encounterable in a driving environment of the vehicle, detecting, using the instance decoder, within each set of the plurality of sets of automotive sensor data, one or more object instances, each object instance corresponding to an object in the driving environment of the vehicle, determining, for each set of the plurality of sets of automotive sensor data, an out of distribution -OOD- indicator based on a latent space vector of the internal autoencoder and an autoencoder latent space probability density function, and, if a comparison of the OOD indicator of a sensor data reliability number of subsequent sets of automotive sensor data indicates a violation of an OOD threshold, causing the at least one driving automation system feature to achieve a minimal risk condition of the vehicle.

In the example method, the autoencoder latent space probability density function may be derived from an autoencoder latent space probability distribution modeled based on a normalizing flow of latent space vectors of the autoencoder during training of the automotive vision system.

In the example method, the OOD indicator of each set of automotive sensor data may correspond to an output of the autoencoder latent space probability density function with an input of the autoencoder latent space probability density function being the latent space vector of the internal autoencoder of the corresponding set of automotive sensor data.

In the example method, the automotive vision system may further comprise a reconstruction decoder coupled to the input encoder and the internal autoencoder, the reconstruction decoder being configured to reconstruct the plurality of sets of automotive sensor data, wherein the input encoder and the reconstruction decoder may form an automotive sensor data autoencoder.

The example method may further comprise deriving, for each of the one or more object classes determined within each set of the plurality of sets of automotive sensor data, an uncertainty indicator indicative of an uncertainty of the object class determination, determining a set uncertainty indicator for each set of automotive sensor data based on the one or more uncertainty indicators derived for each set of automotive sensor data, and, if a comparison of the set uncertainty indicator of an object determination reliability number of subsequent sets of automotive sensor data violates a set uncertainty threshold, causing the at least one driving automation system feature to limit at least one of a speed of the vehicle and a functionality of the at least one driving automation system.

In the example method, the deriving the uncertainty indicator for each of the one or more object classes determined within each set of the plurality of sets of automotive sensor data may be based on a plurality of class probabilities, wherein each class probability indicates for a given subset of a corresponding set of automotive sensor data the probability of the given subset being indicative of a corresponding object class.

In the example method, the deriving the uncertainty indicator for each of the one or more object classes determined within each set of the plurality of sets of automotive sensor data may include determining, based on a plurality of class probabilities, a Dirichlet distribution having a plurality of concentration parameters, wherein the plurality of class probabilities may correspond to the plurality of concentration parameters.

In the example method, the plurality of class probabilities may correspond to a plurality of activation levels of an output layer of the object class decoder.

In the example method, the determining the set uncertainty indicator for each set of automotive sensor data may include one of obtaining the set uncertainty indicator by averaging the one or more uncertainty indicators derived for a given set of automotive sensor data, or selecting the highest uncertainty indicator derived for a given set of automotive sensor data as the set uncertainty indicator of the given set of automotive sensor data.

The example method may further include, if a comparison of the set uncertainty indicator of a functionality return number of subsequent sets of automotive sensor data does not violate the set uncertainty threshold, causing the at least one driving automation system feature to stop limiting at least one of the speed of the vehicle and the functionality of the at least one driving automation system.

In an example method, the minimal risk condition may be one of a request to a driver of the vehicle to take over control of the vehicle, one or more at least longitudinal control inputs by the least one driving automation system feature causing the vehicle to come to a stop, or causing the vehicle to enter a limp-home mode, the limp-home mode being configured to control the vehicle to return home or to a service point at a limited speed.

The example method may further include performing the at least one driving automation system feature concurrently with the determining the one or more object classes within each set of automotive sensor data and with the detecting the one or more object instances within each set of automotive sensor data.

In an example, an automotive control unit comprises at least one processing unit and a memory coupled to the at least one processing unit and configured to store machine-readable instructions, wherein the machine-readable instructions cause the at least one processing unit to implement at least one driving automation system feature and an automotive vision system comprising an input encoder, an internal autoencoder coupled to the input encoder, an object class decoder coupled to the input encoder and the autoencoder and an instance decoder coupled to the input encoder and the autoencoder and further cause the at least one processing unit to: determine, using the object class decoder, within each set of a plurality of sets of automotive sensor data, one or more object classes out of a plurality of object classes, each object class corresponding to an object type encounterable in a driving environment of the vehicle, detect, using the instance decoder, within each set of the plurality of sets of automotive sensor data, one or more object instances, each object instance corresponding to an object in the driving environment of the vehicle, determine, for each set of the plurality of sets of automotive sensor data, an out of distribution -OOD- indicator based on a latent space vector of the internal autoencoder and an autoencoder latent space probability density function; and if a comparison of the OOD indicator of a sensor data reliability number of subsequent sets of automotive sensor data indicates a violation of an OOD threshold, cause the at least one driving automation system feature to achieve a minimal risk condition of the vehicle.

In the example automotive control unit, the machine-readable instructions further cause the at least one processing unit to perform the method of any one of the above example methods.

In an example, a vehicle comprises the above example automotive control unit.

The preceding description has been provided to illustrate a method and a system for determining the reliability of object instance detection and object classification in an at least partially automated vehicle. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

**List of Reference Signs**

| | |
|---|---|
| 100 - 190 | method and method steps |
| 210 | plurality of sets of automotive sensor data |
| 211 | set of automotive sensor data |
| 212 | reconstructed set of automotive sensor data |
| 300 | automotive vision system |
| 310 | input encoder |
| 320 | internal autoencoder |
| 330 | object class decoder |
| 331 | detected object class |
| 340 | instance decoder |
| 341 | object instance |
| 350 | reconstruction decoder |
| 410 | OOD indicator determination |
| 411 | OOD indicator |
| 420 | object class uncertainty determination |
| 421 | uncertainty value |
| 500 | vehicle |
| 510 | automotive sensor |
| 600 | automotive control unit |
| 600B | bus |
| 610 | CPU |
| 620 | GPU |
| 620c | connection |
| 630 | automotive processing system |
| 640 | memory |
| 650 | removable storage |
| 660 | storage |
| 670 | cellular interface |
| 680 | GNSS interface |
| 690 | communications interface |

**Claims**

1. Method (100) configured to determine a reliability of an object instance detection and classification in a vehicle (500) configured to perform at least one driving automation system feature based on the object instance detection and classification, wherein the object instance detection and classification is performed using an automotive vision system (300) comprising an input encoder (310), an internal autoencoder (320) coupled to the input encoder (310), an object class decoder (330) coupled to the input encoder (310) and the internal autoencoder (320) and an instance decoder (340) coupled to the input encoder (310) and the internal autoencoder (320), the method comprising:

determining (110), using the object class decoder (330), within each set $(211_1\text{-}211_i)$ of a plurality of sets of automotive sensor data (210), one or more object classes (331) out of a plurality of object classes, each object class (331) corresponding to an object type encounterable in a driving environment of the vehicle (500);

detecting (120), using the instance decoder (340), within each set $(211_1\text{-}211_i)$ of the plurality of sets of automotive sensor data (210), one or more object instances (341), each object instance (341) corresponding to an object in the driving environment of the vehicle (500);

determining (140), for each set $(211_1\text{-}211_i)$ of the plurality of sets of automotive sensor data (210), an out of distribution -OOD- indicator (411) based on a latent space vector of the internal autoencoder (320) and an autoencoder latent space probability density function; and

if a comparison of the OOD indicator (411) of a sensor data reliability number of subsequent sets of automotive sensor data $(211_1\text{-}211_i)$ indicates a violation of an OOD threshold, causing (150) the at least one driving automation system feature to achieve a minimal risk condition of the vehicle (500).

2. Method (100) according to claim 1, wherein the autoencoder latent space probability density function is derived from an autoencoder latent space probability distribution modeled based on a normalizing flow of latent space vectors of the internal autoencoder (320) during training of the automotive vision system (300).

3. Method (100) according to any one of the preceding claims, wherein the OOD indicator (411) of each set of automotive sensor data $(211_1\text{-}211_i)$ corresponds to an output of the autoencoder latent space probability density function with an input of the autoencoder latent space probability density function being the latent space vector of the internal autoencoder (320) of the corresponding set of automotive sensor data $(211_1\text{-}211_i)$.

4. Method (100) according to any one of the preceding claims, wherein the automotive vision system (300) further comprises a reconstruction decoder (350) coupled to the input encoder (310) and the internal autoencoder (320), the reconstruction decoder (350) being configured to reconstruct the plurality of sets of automotive sensor data $(211_1\text{-}211_i)$, wherein the input encoder (310) and the reconstruction decoder (320) form an automotive sensor data autoencoder.

5. Method (100) according to any one of the preceding claims, further comprising:

deriving (160), for each of the one or more object classes (331) determined within each set $(211_1\text{-}211_i)$ of the plurality of sets of automotive sensor data (210), an uncertainty indicator (421) indicative of an uncertainty of the object class determination;

determining (170) a set uncertainty indicator for each set of automotive sensor data $(211_1\text{-}211_i)$ based on the one or more uncertainty indicators (421) derived for each set of automotive sensor data $(211_1\text{-}211_i)$; and

if a comparison of the set uncertainty indicator of an object determination reliability number of subsequent sets of automotive sensor data $(211_1\text{-}211_i)$ violates a set uncertainty threshold, causing (180) the at least one driving automation system feature to limit at least one of a speed of the vehicle and a functionality of the at least one driving automation system.

6. The method (100) of claim 5, wherein the deriving (160) the uncertainty indicator for each of the one or more object classes (331) determined within each set $(211_1\text{-}211_i)$ of the plurality of sets of automotive sensor data (210) is based on a plurality of class probabilities, wherein each class probability indicates for a given subset of a corresponding set of automotive sensor data $(211_1\text{-}211_i)$ the probability of the given subset being indicative of a corresponding object class.

7. The method (100) of claim 6, wherein the deriving (160) the uncertainty indicator (421) for each of the one or more object classes (331) determined within each set $(211_1\text{-}211_i)$ of the plurality of sets of automotive sensor data (210) includes determining (161), based on a plurality of class probabilities, a Dirichlet distribution having a plurality of concentration parameters, wherein the plurality of class probabilities corresponds to the plurality of concentration parameters.

8. The method (100) of any one of claims 6 and 7, wherein the plurality of class probabilities corresponds to a plurality of activation levels of an output layer of the object class decoder (330).

9. The method (100) of any one of claims 5 to 8, wherein the determining the set uncertainty indicator for each set ($211_1$-$211_i$) of automotive sensor data includes one of:

> obtaining (171) the set uncertainty indicator by averaging the one or more uncertainty indicators (421) derived for a given set of automotive sensor data ($211_1$-$211_i$); or
> selecting (172) the highest uncertainty indicator (421) derived for a given set of automotive sensor data ($211_1$-$211_i$) as the set uncertainty indicator of the given set of automotive sensor data ($211_1$-$211_i$).

10. The method (100) of any one of claims 5 to 9, further comprising:
if a comparison of the set uncertainty indicator of a functionality return number of subsequent sets of automotive sensor data ($211_1$-$211_i$) does not violate the set uncertainty threshold, causing (190) the at least one driving automation system feature to stop limiting at least one of the speed of the vehicle (500) and the functionality of the at least one driving automation system.

11. Method (100) according to any one of the preceding claims, wherein the minimal risk condition is one of:

> a request to a driver of the vehicle (500) to take over control of the vehicle,
> one or more at least longitudinal control inputs by the least one driving automation system feature causing the vehicle (500) to come to a stop, or
> causing the vehicle (500) to enter a limp-home mode, the limp-home mode being configured to control the vehicle (500) to return home or to a service point at a limited speed.

12. Method (100) according to any one of the preceding claims, further comprising:
performing (130) the at least one driving automation system feature concurrently with the determining (110) the one or more object classes (331) within each set of automotive sensor data and with the detecting (120) the one or more object instances (341) within each set of automotive sensor data.

13. An automotive control unit (600), comprising:

> at least one processing unit (610, 620, 630); and
> a memory (640, 650, 660) coupled to the at least one processing unit (610, 620, 630) and configured to store machine-readable instructions, wherein the machine-readable instructions cause the at least one processing unit (610, 620, 630) to implement at least one driving automation system feature and an automotive vision system (300) comprising an input encoder (310), an internal autoencoder (320) coupled to the input encoder (330), an object class decoder (330) coupled to the input encoder (310) and the internal autoencoder (320) and an instance decoder (340) coupled to the input encoder (310) and the internal autoencoder (320) and further cause the at least one processing unit (610, 620, 630) to:

> determine, using the object class decoder (330), within each set ($211_1$-$211_i$) of a plurality of sets of automotive sensor data (210), one or more object classes (331) out of a plurality of object classes, each object class (331) corresponding to an object type encounterable in a driving environment of a vehicle (500);
> detect, using the instance decoder (340), within each set ($211_1$-$211_i$) of the plurality of sets of automotive sensor data (210), one or more object instances (341), each object instance (341) corresponding to an object in the driving environment of the vehicle (500);
> determine, for each set ($211_1$-$211_i$) of the plurality of sets of automotive sensor data (210), an out of distribution -OOD- indicator (411) based on a latent space vector of the internal autoencoder (320) and an autoencoder latent space probability density function; and
> if a comparison of the OOD indicator (411) of a sensor data reliability number of subsequent sets of automotive sensor data ($211_1$-$211_i$) indicates a violation of an OOD threshold, cause the at least one driving automation system feature to achieve a minimal risk condition of the vehicle (500).

14. The automotive control unit (600) of claim 13, wherein the machine-readable instructions further cause the at least one processing unit (610, 620, 630) to perform the method (100) of any one of claims 2 to 12.

15. A vehicle (500) comprising the automotive control (600) unit of any one of claims 13 and 14.

100

**110** — determining, using an object class decoder, within each set of a plurality of sets of automotive sensor data, one or more object classes out of a plurality of object classes

**120** — detecting, using an instance decoder, within each set of the plurality of sets of automotive sensor data, one or more object instances

**130** — performing the at least one driving automation system feature concurrently with the determining the one or more object classes within each set of automotive sensor data and with the detecting the one or more object instances within each set of automotive sensor data

**140** — determining, for each set of a plurality of sets of automotive sensor data, an OOD indicator

**150** — if a comparison of the OOD indicator of a number of subsequent sets of automotive sensor data indicates a violation of an OOD threshold, causing the at least one driving automation system feature to achieve a minimal risk condition of the vehicle

**160** — deriving, for each of the one or more object classes determined within each set of the plurality of sets of automotive sensor data, an uncertainty value indicative of an uncertainty of the object class determination

    **161** — determining a Dirichlet distribution having a plurality of concentration parameters

**170** — determining a set uncertainty value for each set of automotive sensor

    **171** — obtaining the set uncertainty value by averaging the one or more uncertainty values derived for a given set of automotive sensor data

    **172** — selecting the highest uncertainty value derived for a given set of automotive sensor data as the set uncertainty value of the given set of automotive sensor data

**180** — if a comparison of the set uncertainty indicator of a number of subsequent sets of automotive sensor data violates a set uncertainty threshold, causing the at least one driving automation system feature to limit at least one of a speed of the vehicle and a functionality of the at least one driving automation system

**190** — if a comparison of the set uncertainty indicator of a number of subsequent sets of automotive sensor data does not violate the set uncertainty threshold, causing the at least one driving automation system feature to stop limiting at least one of the speed of the vehicle and the functionality of the at least one driving automation system

Fig. 1

Fig. 2

Fig. 3

Fig. 4

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2021/026355 A1 (CHEN KE [US] ET AL) 28. Januar 2021 (2021-01-28) * Absätze [0024] - [0028], [0048], [0049], [0051], [0056]; Abbildung 2 * ----- | 1-15 | INV. G06V10/82 G06V20/56 G06V20/58 |
| Y | KIM YOUNG-GYU ET AL: "Anomaly Detection Using Autoencoder With Feature Vector Frequency Map", IEEE ACCESS, IEEE, USA, Bd. 9, 14. Mai 2021 (2021-05-14), Seiten 73808-73817, XP011856711, DOI: 10.1109/ACCESS.2021.3080330 [gefunden am 2021-05-23] * Section III - IV.B; Abbildung 2 * ----- | 1-15 | |
| A | US 2022/227379 A1 (ROBINSON LUKE ANTHONY WILLIAM [GB] ET AL) 21. Juli 2022 (2022-07-21) * Absätze [0100], [0101], [0124] - [0126], [0133], [0140] - [0141], [0172]; Abbildungen 1,4 * ----- | 1-15 | |
| A | WO 2023/284953 A1 (BAYERISCHE MOTOREN WERKE AG [DE]) 19. Januar 2023 (2023-01-19) * Seite 6, Zeile 21 - Seite 7, Zeile 21; Abbildung 2 * * Seite 15, Zeile 4 - Seite 16, Zeile 21 * ----- | 1-15 | |

**RECHERCHIERTE SACHGEBIETE (IPC)**

G06V

Der vorliegende Recherchenbericht wurde für alle Patentansprüche erstellt

| Recherchenort | Abschlußdatum der Recherche | Prüfer |
|---|---|---|
| Den Haag | 12. Februar 2025 | Meurisse, Wim |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 19 8521

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2025

| Im Recherchenbericht angeführtes Patentdokument | Datum der Veröffentlichung | Mitglied(er) der Patentfamilie | | Datum der Veröffentlichung |
|---|---|---|---|---|
| US 2021026355 A1 | 28-01-2021 | US | 2021026355 A1 | 28-01-2021 |
| | | US | 2025014186 A1 | 09-01-2025 |
| | | WO | 2021016596 A1 | 28-01-2021 |
| US 2022227379 A1 | 21-07-2022 | US | 2022227379 A1 | 21-07-2022 |
| | | US | 2024412038 A1 | 12-12-2024 |
| WO 2023284953 A1 | 19-01-2023 | EP | 4371019 A1 | 22-05-2024 |
| | | WO | 2023284953 A1 | 19-01-2023 |

Für nähere Einzelheiten zu diesem Anhang : siehe Amtsblatt des Europäischen Patentamts, Nr.12/82